# EUROPEAN PATENT APPLICATION

(11) **EP 0 688 496 A1**
(43) Date of publication of application: **27.12.1995**
(21) Application number: 95201645.9
(22) Date of filing: 16.06.1995
(51) Int. Cl.: A01G 9/10

(54) **Device for positioning growing blocks**

(30) Priority: 24.06.1994 NL 9401046
(71) Applicant: Damgro B.V., NL-2671 MC Naaldwijk (NL)
(72) Inventor: Grootscholten, Johannes Petrus Wilhelmus Maria, NL-2671 MC Naaldwijk (NL); Noordam, Leendert, NL-2691 PC 's-Gravenzande (NL)
(74) Representative: Hoorweg, Petrus Nicolaas

(57) **Abstract**

A device for mutually positioning a plurality of growing blocks (P), which device comprises at least one carrier (1) for supporting, storing and transporting these blocks (P), wherein a positioning element (6) provided with a plurality of stop members (7,8) for a block (P) placed according to a predetermined pattern is connected non-shiftably or practically non-shiftably to the carrier (1) such that the blocks (P) can be placed on the carrier (1) at the desired mutual distance, whereby the placing pattern of the blocks (P) can be adapted to the method of culture.

## Description

The invention relates to a device for mutually positioning a plurality of growing blocks, which device comprises at least a carrier for supporting, storing and transporting these blocks.

For cultivating plants much use is made of growing blocks of random material, for instance rockwool, which blocks have a prescribed dimension along the periphery. Such dimensions make it difficult to handle the growing blocks mechanically, i.e. to group them during growth and during transport to the subsequent grower. For simultaneous handling of a plurality of blocks these latter are usually placed on a carrier in accordance with a desired pattern.

The invention has for its object to enable change of the patterns on the carrier with simple means, so that the carrier is suitable for one or more patterns of growing blocks subject to the desired space round the plant.

For this purpose the invention provides a device which is distinguished in that a positioning element provided with a plurality of stop members for a block placed according to a predetermined pattern is connected non-shiftably or practically non-shiftably to the carrier such that the blocks can be placed on the carrier at the desired mutual distance.

Due to the use of the positioning element the grower can, if desired, change the patterns on the carrier in fully mechanical manner so that for instance in the first growth phase the growing blocks lie closer together and in the subsequent phases further apart, whereby however the same carrier can be used for transport and storage.

According to a further development the positioning element can be provided with stop members such that more than one pattern can be obtained with a positioning element.

A carrier typically used in plant culture is a crate of random material, for instance plastic, which consists of a bottom surface and four standing peripheral wall parts. For such a carrier the invention proposes to embody the positioning element as a grid of transverse and longitudinal bars of which at least a transverse respectively longitudinal bar has end surfaces which butt against the inner side of the standing wall parts of the crate-like carrier. The positioning element is hereby fixed relative to the carrier so that shifting relative to the bottom surface is prevented.

In order to be able to carry out placing of the growing blocks without problems it is recommended to provide the transverse respectively longitudinal bars with a locating edge on the upper side thereof.

For mechanical handling of the positioning elements during placing in or on the carrier the invention further proposes to embody at least the upper surface at more than one position as flat surface, wherein engagement by means of suction cups becomes possible.

The positioning element according to the invention is preferably formed such that they are stackable. The positioning element according to the invention can moreover be an injection moulded product or formed from solid material, for instance EPS.

Above mentioned and other features of the invention will be further elucidated hereinbelow with reference to an embodiment. In the drawing:

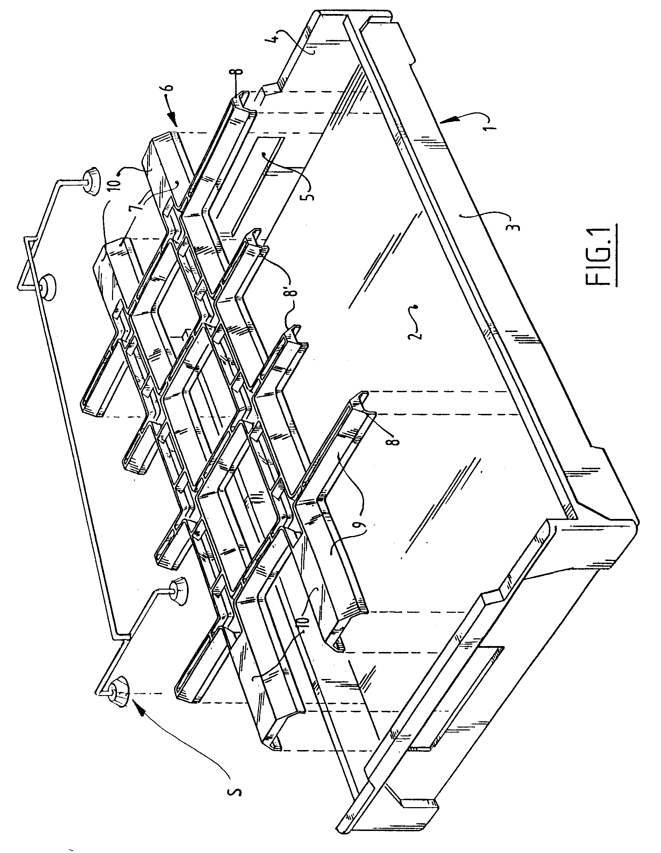

fig. 1 shows a perspective view of a carrier in which a positioning element according to the invention can be placed,
fig. 2 is a view corresponding with fig. 1 of a carrier in which the positioning element is placed and in which growing blocks are grouped,
fig. 3 is a perspective view of a plurality of positioning elements which are stacked in nested manner,
fig. 4 is a perspective view corresponding with fig. 1 of a second embodiment of the positioning element,
fig. 5 is a view corresponding with fig. 4 of a third embodiment of the positioning element according to the invention.

Indicated in the drawing with the numeral 1 is the carrier which can take a random form but which preferably has a crate shape provided with a bottom surface 2 and standing side walls 3, 4 respectively. The crate is provided with carrying means in the form of hand-grips 5 and is profiled such that machine handling is also possible for transport and storage. The size of the crate in width and length is such that growing blocks P can be placed pushed against each other, i.e. in four rows of six growing blocks, whereby they are received as a group non-shiftably or practically non-shiftably in the crate.

During the further culture of the plants in the growing blocks, which is assumed known, the plants will require more space after a time. To this end the growing blocks P must be re-ordered, which should preferably be performed by machine. It is also possible to group the growing blocks in the desired pattern immediately cultivation starts.

According to the invention a positioning element 6 which enables a new grouping of growing blocks P can be placed in the crate of standard size according to the figures.

The positioning element 6 consists in the shown embodiment of two longitudinal bars 7 and four transverse bars 8. The transverse and longitudinal bars have a length such that they fit exactly inside the standing side walls 3, 4 of crate 1. In the embodiment shown the intermediate transverse bars 8' take a shorter form, since they do not have to function for non-shifting arrangement of positioning element 6 in crate 1.

Within the scope of the invention it is of course also possible to embody these transverse bars as long as the two other transverse bars 8. It is also possible to embody one of the lengthwise bars 7 in shorter form.

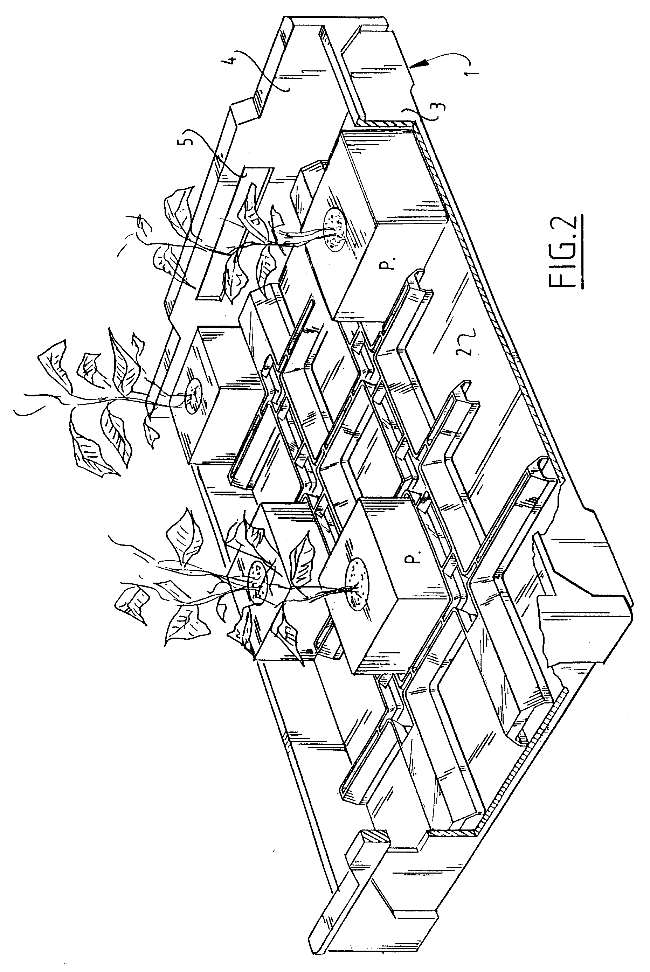

After a positioning element 6 has been placed in the crate, see fig. 2, the growing blocks P can be arranged in the spaces between the transverse and longitudinal bars. The longitudinal and transverse bars function herein as stop members for the growing blocks. Although for the sake of clarity only a number are shown in fig. 2, all spaces can be filled so that three rows of five growing blocks are formed. The width of the bars will be chosen together with the dimensions of growing blocks P such that the blocks with the positioning element fit precisely inside the upright walls 3, 4 of the crate.

It is noted here that the positioning element can consist of a different number of transverse and longitudinal bars so that another pattern of growing blocks can be obtained. Two rows of five or four growing blocks can be envisaged here. Alternatively, it is possible to embody the transverse and longitudinal bars not in a continuous line but in staggered manner so that a pattern of staggered growing blocks can also be obtained in the crate 1.

For easy placing of growing blocks P the positioning element 6 is embodied with a locating edge 9 on the upper side thereof which runs slopingly.

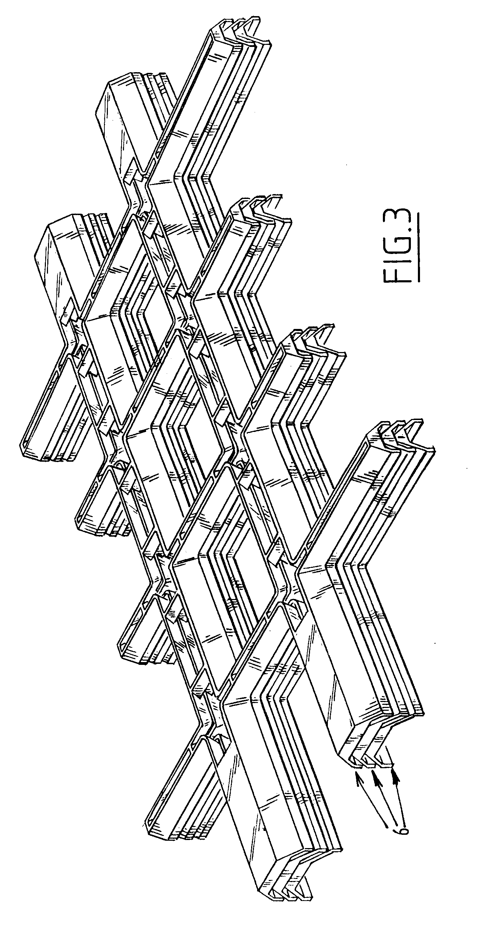

In addition, the positioning element 6 preferably consists of an injected moulded product wherein the underside of positioning element 6 has a profile such that it could accommodate a part of the upper side thereof, which is shown in fig. 3. This enables a nestable stacking of positioning elements 6.

In preference the positioning element is further embodied with a flat top surface 10, which may or may not be interrupted, but which can likewise extend over the whole upper part. Such a flat face makes it possible, by means of suction cups S of a handling machine, to automatically carry the positioning elements 6 from a stack as in fig. 3 above a crate 1 and then to lower them. Automatic operation is thus made possible.

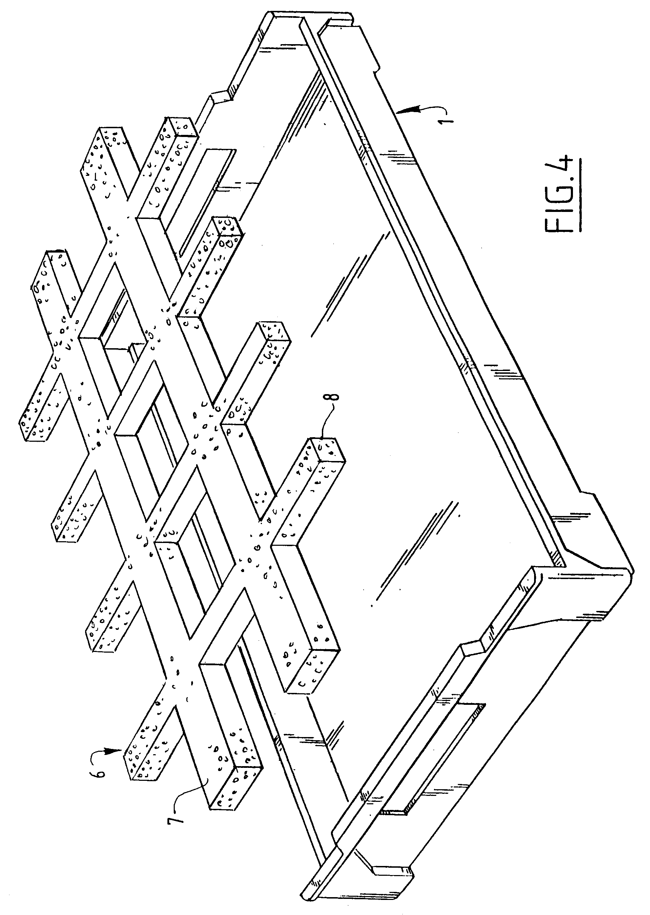

Fig. 4 shows an embodiment wherein positioning element 6 is manufactured of solid material, wherein the longitudinal bars 7 and transverse bars 8 have the same length. The length is such that this element connects onto the inner wall of the standing edges of carrier 1, wherein some clearance can be provided to take into account variations in carrier dimensions. Positioning element 6 can be manufactured starting from a plate of desired thickness, wherein the recesses between the transverse and longitudinal bars can be cut out, punched out and the like. If desired, a locating edge 9 can likewise be arranged on the transverse and longitudinal bars to facilitate placing of the growing blocks.

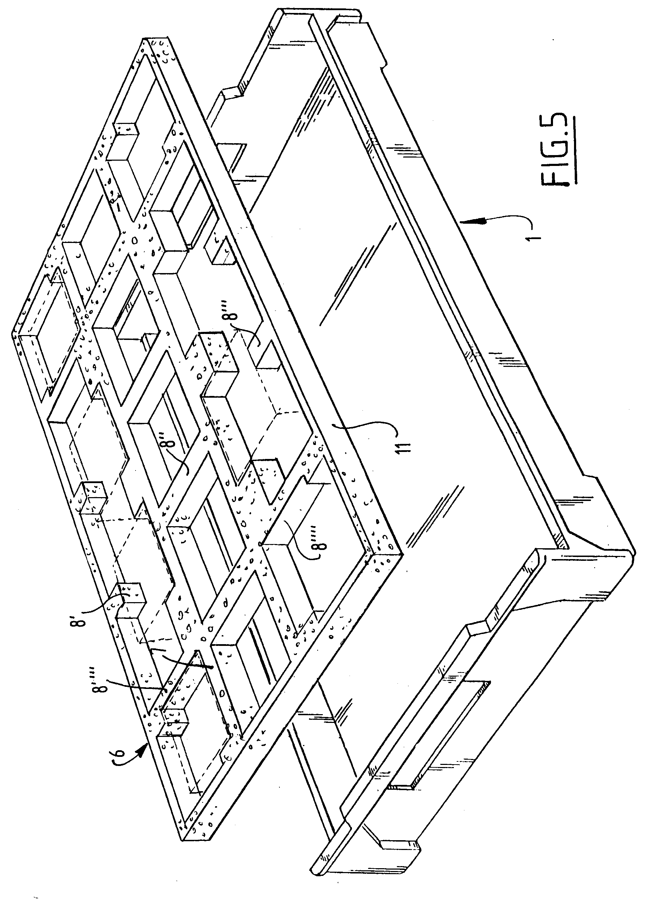

Fig. 5 shows an embodiment of the positioning element 6 wherein the recesses are arranged in two patterns. For this purpose the longitudinal bars 7 are continuous while the transverse bars 8 are interrupted at determined positions. Positioning element 6 is embodied here with a frame 11 arranged therearound, the outer wall of which connects onto the inner walls of the standing edges of carrier 1.

It can be seen clearly from the drawing that the longitudinal bars 7 are made narrow in places so that, together with the recesses in the transverse bars or interruptions in the transverse bars, a different number of growing blocks can be placed in the positioning element than the three by five distribution of the foregoing embodiments. This is indicated with the dashed lines 12 which show that, instead of five, four growing blocks can be placed in a row.

The middle transverse bars 8 consist of three parts 8', 8'' and 8''', while the outer transverse bars are narrowed at 8''''.

This embodiment indicates that with a positioning element 6 different patterns of blocks can be obtained in carrier 1.

The invention is not limited to the above described embodiment.

## Claims

1. Device for mutually positioning a plurality of growing blocks, which device comprises at least one carrier for supporting, storing and transporting these blocks, **characterized in that** a positioning element provided with a plurality of stop members for a block placed according to a predetermined pattern is connected non-shiftably or practically non-shiftably to the carrier such that the blocks can be placed on the carrier at the desired mutual distance.

2. Device as claimed in claim 1, **characterized in that** the positioning element is equipped with stop members such that more than one placing pattern for the blocks is formed.

3. Device as claimed in claim 1 and/or 2, wherein the carrier is embodied as a crate of random material consisting of a bottom surface and four standing peripheral wall parts, **characterized in that** the positioning element is a grid of longitudinal and transverse bars of which end surfaces of at least one longitudinal and transverse bar butt against the standing wall parts.

4. Device as claimed in claim 3, **characterized in that** the grid bars have a locating edge on the upper side.

5. Device as claimed in claim 3, **characterized in that** the positioning element has one or more flat surface parts on the upper side.

6. Device as claimed in any of the foregoing claims, **characterized in that** the positioning element has on the underside a profile suitable for receiving the upper part of a similar element in order to enable nestable stacking of the elements.

7. Device as claimed in any of the foregoing claims, **characterized in that** the positioning element is an injection moulded product.
